# EUROPEAN PATENT APPLICATION

(11) **EP 3 412 439 A1**
(43) Date of publication of application: **12.12.2018**
(21) Application number: 17174964.1
(22) Date of filing: 08.06.2017
(51) Int. Cl.: B29C 73/02, B29C 73/34, B29C 65/74, F03D 80/50, B64F 5/40

(54) **REPAIR FILAMENT AND PROCESS FOR REPAIRING A WIND TURBINE PROTECTION TAPE**

(71) Applicant: 3M Innovative Properties Company, Saint Paul, MN 55133-3427 (US)
(72) Inventor: Schoeppel, Wolfgang, 41470 Neuss (DE); Korsten, Volker, 41239 Mönchengladbach (DE)
(74) Representative: Bergen, Katja

(57) **Abstract**

A method for repairing the surface of rotor blades or aircraft wings, comprising
(c) a composite substrate (1); and
(d) a protection layer (2) having at least one area of at least partial damage, the method comprising:
(vii) removing at least part of the damaged part of the protection tape (2);
(viii) optionally, reconstructing the surface of damaged composite substrate (1);
(ix) optionally, applying primer (6) solution to the surface of the composite substrate;
(x) optionally, applying a polymer solution, preferably in at least one organic solvent;
(xi) applying heat so as to heat the surface of the composite substrate;
(xii) applying a polymer filament (7) onto the surface of the composite substrate so that the polymer filament melts and covers the damaged area.

## Description

### Field

The present invention relates to a method for repairing the surface of rotor blades, in particular of wind turbines or aircraft wings. The present disclosure relates to a method for repairing rotor blades comprising a protection layer, in particular on their leading edges. In addition, the present invention further relates to a rotor blade or aircraft wing comprising a protection layer obtained by the method as described herein.

### Background

It has long been known that objects made of polymeric or composite materials travelling at high speeds may suffer from erosion due to the contact with dust, sand or even rain. In fact, this is well-observed with regard to the leading edges of e. g. rotor blades of helicopters, wings of aircrafts, and, since their introduction, rotor blades of wind turbines. Erosion, in particular rain erosion, can not only be detrimental to the structural integrity or optical appearance of the objects concerned, but also have negative impact on the aerodynamic profile of rotor blades and wings. While it is obvious that this means an undesired deterioration of aerodynamic efficiency of wings and helicopter rotor blades, it must be stressed that this is also of great concern when running a wind turbine. This circumstance is even aggravated due to the ever increasing size of wind turbines and the corresponding rotor blades, since an increase in size has the consequence of an increase in speed at which a particular point on the leading edge of the rotor blade travels. In particular, at the leading edges closer to the tip of the blade speeds are achieved at which rain erosion represents a problem.

Thus, counter-measures were developed, *inter alia*, the application of protection tapes over the leading edges of rotor blades of wind turbines and helicopters. These protection tapes are well-known in the art. Often, polyurethane tapes are used, which are also in most cases equipped with a pressure-sensitive adhesive (PSA) layer for affixing the tape to the rotor blade. However, these tapes are also prone to erosions such as rain erosion and therefore need to be replaced from time to time. Clearly, when undergoing repair, the operation of helicopters and particularly wind turbines must be suspended, which directly means a loss of output of electric energy and a corresponding economic loss. Thus, repair times should be as short as possible, giving rise to a demand for cost- and time-efficient repair measures and equipment which is easy to apply. Moreover, erosion or damage may not only appear on the complete leading edge of rotor blades or wings, but may also be present at small or limited localizations on the edge. Hence, it may be desirable not to remove all of the protection tape, but only repair the damaged or eroded parts. Finally, it may also be desirable that the repaired area exhibits the same erosion protection as the original protection layer. Also, repair of small areas may be necessary because of transportation damages.

In summary, without wanting to deny the advantages and processes in the art in this regard, there still exists a need for new methods for repairing erosion protection layers, in particular on leading edges of rotors of wind turbines and helicopters as well as aircraft wings. There exists especially a need for new methods for repairing smaller damages, like punctures, tears, cuts or gaps in erosion protection tapes.

### Summary

In one aspect of the present disclosure, there is provided a method for repairing the surface of rotor blades or aircraft wings, comprising
(a) a composite substrate; and
(b) a protection layer having at least one area of at least partial damage, the method comprising:
   (i) removing at least part of the damaged part of the protection tape;
   (ii) optionally, reconstructing the surface of damaged composite substrate;
   (iii) optionally, applying primer solution to the surface of the composite substrate;
   (iv) optionally, applying a polymer solution, preferably in at least one organic solvent;
   (v) applying heat so as to heat the surface of the composite substrate;
   (vi) applying a polymer filament onto the surface of the composite substrate so that the polymer filament melts and covers the damaged area.

In another aspect of the present invention, there is provided a rotor blade or aircraft wing comprising a protection layer, obtained by the method as described herein.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e. g., 1 to 10 includes 1.4, 1.9, 2.33, 5.75, 9.98, etc.). Also herein, recitation of "at least one" includes all numbers of one and greater (e. g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items.

Amounts of ingredients of a composition may be indicated by % by weight (or "% wt". or "wt.-%") unless specified otherwise. The amounts of all ingredients gives 100 % wt. unless specified otherwise. If the amounts of ingredients is identified by % mole the amount of all ingredients gives 100 % mole unless specified otherwise.

Unless explicitly stated otherwise, all embodiments of the present disclosure can be combined freely.

The first aspect of the present invention is a method for repairing the surface of rotor blades or aircraft wings, comprising
(a) a composite substrate; and
(b) a protection layer having at least one area of at least partial damage, the method comprising:
   (i) removing at least part of the damaged part of the protection tape;
   (ii) optionally, reconstructing the surface of damaged composite substrate;
   (iii) optionally, applying primer solution to the surface of the composite substrate;
   (iv) optionally, applying a polymer solution, preferably in at least one organic solvent;
   (v) applying heat so as to heat the surface of the composite substrate;
   (vi) applying a polymer filament onto the surface of the composite substrate so that the polymer filament melts and covers the damaged area.

Accordingly, the method of the invention gives rise to a combination of effects desirable for the repair and maintenance of rotor blades or aircraft wings, such as rotor blades of wind turbines. In particular, the method as described herein enables the skilled person to quickly repair localized parts of damaged protective layers on substrates. In addition, the repaired part of the protection layer may exhibit the same erosion protective properties as the original undamaged part. Thus, the presently described method is suited for efficiently repairing damaged parts of erosion protection layers of aircraft wings or rotors of helicopters and wind turbines, respectively.

Generally, the present method relates to repairing the surface of aircraft wings and rotor blades of helicopters and wind turbines. Preferably, the method according to the present disclosure is applied for repairing the surface of rotor blades of wind turbines, in particular the leading edges of wind turbines.

The rotor blades and the aircraft wings as used herein generally comprise a composite substrate, one or several coatings, and a protection layer disposed thereon. In most cases, the protection layer will be located on the leading edge of these substrates, since erosion and rain erosion takes part mostly on these areas. The composite substrates itself may consist of composite materials commonly known and used in the art for rotor blades of helicopters and wind turbines as well as aircraft wings. For example, a composite material may be obtained by curing an epoxy or phenoxy resin enforced by fibers or a woven or non-woven fabric, or may contain polyurethane enforced with non-woven or woven fabrics. Fibers and fabrics obtained therefrom may be selected from polymeric fibers, glass fibers, metal fibers, and carbon fibers, dependent on the selected property and price of the desired application. In general, on top of the composite substrate, at least one coating is applied. These coatings may be referred to as top coat or hard coat and may comprise at least one filler material to obtain an even surface and at least one top coat obtained from polyurethanes (often applied as two-component system) and epoxy coating compositions known in the art for these purposes.

The protection layer disposed on the composite substrate may be obtained from an erosion protection tape known in the art. Such a tape may comprise a polymeric layer and a pressure sensitive adhesive (PSA) layer used for affixing the tape onto the substrate. The polymeric layer of the tape forming the protection layer may comprise, for example, polyurethane or a thermoplastic polyurethane (TPU). Erosion protection tapes are, for example, commercially available from 3M Germany GmbH under the trade designation Wind Protection Tape W8607 or W8750.

The protection layer of the substrate may exhibit at least one area of at least partial damage. Damage is either or both physical and chemical damage, however, in the present context physical damage is predominant. Physical damage is in most cases erosion caused by rain, dust, sand, or other particles. In any event, the nature and appearance of such damage is well-known to the skilled person. Moreover, also the coatings and substrate beneath the protection layer may be affected by physical damage such as rain erosion and the like. Damage comprises all kind of damages, in particular small, localized damage such as cracks or punctual damage, as well as damage in larger areas of several square centimetres. The damage that best works with the current invention, may especially comprise smaller damages, like punctures, tears, cuts or gaps. If the damage is larger, e. g. covers an area of several square centimetres, the current invention can be combined with other repair solutions such as for example with a repair solution using a repair patch of a polymer tape. The current invention may be used in such a scenario to seal any gaps that may exist between the protection layer and the repair tape. Also, damage comprises damage only to a certain thickness of the protective layer or to the complete thickness of the protective layer and the surface under the protective layer, i. e. the hard coat of the composite substrate itself.

In the first step of the method according to the present invention, at least part of the damaged part of the protection layer, i. e. protection tape affixed to the substrate surface, is removed. Preferably, the complete damaged part of the protection layer is removed. Also, damaged top coatings, fillers or other underlying layers may need to be removed. It is also preferred that more of the damaged area of the protective layer is removed. That is, some of the non-damaged protection layer/protection tape adjacent to the damages area may be removed. As appreciated by the skilled person, areas are cut with for example a knife or other cutlery and then the damaged parts are removed in stripes or patches. Finally, removal of protection layers or part or protection layers, or parts of or complete protection tapes is well-known in the art.

In the above-mentioned case where the substrate, i. e. the surface of the composite substrate, is also affected by damage, it is possible that this surface is reconstructed. This may be achieved by means commonly known in the art, e. g. by the application of structural repair patches and fillers. In addition, a top coating could then be applied as known in the art as well. Similarly, if only the top coating under said protection layer is damaged, it is understood that this top coating could then be coated onto the substrate. Reconstructing the damaged part of the surface of the composite substrate may further comprise grinding and/or polishing the surface of the part. Reconstruction of the surface of the composite substrate itself can be omitted. The damaged area may also be filled with the polymer filament according to the invention as will be described later.

It may further be preferable to apply an adhesion promoter (which may also be referred to as primer) onto the composite substrate surface and/or the reconstructed composite surface or any other coating or layer which represents the top layer of the construction obtained in the previous optional repair step. This may have the effect of an improved adhesion of a repair polymer, e. g. in form of a polymer filament as described in this invention, to the composite substrate, which may also give rise to an improved erosion resistance of the repaired area covered by the polymer filament. In general, the adhesion promoter or primer is coated to a thickness dependent on the constitution of the underlying substrate surface. That is, a more porous surface requires a thicker coating of primer or adhesion promoter. For example, the adhesion promoter may be coated to a thickness in the range of from 10 to 50 µm. Primer solutions and methods for their applications are well-known in the art. For example, polyamide solutions in isopropanol are available, e. g. under the trade designation W9910 primer from 3M Germany GmbH. It is preferred that the solvent of the adhesion promoter solution is evaporated before the next step, i. e. the substrate coated with said adhesion promoter solution is dried. This may be achieved by either allowing the coating to dry under ambient conditions or by heating it, e. g. by using a heat gun or the like.

Instead or in addition to a primer it is possible to apply a solution of at least one polymer in at least one organic solvent onto the surface of the composite substrate. In this regard, it is understood that the above-described area of the composite surface is meant of which the protective layer was removed in a previous step. Applying the polymer solution may have the effect that the adhesion of a repair polymer, e. g. in form of a polymer filament as described in this invention, to the composite substrate surface is improved, which may further enhance the effects described herein such as improved erosion protection of the repaired protection layer of the composite substrate. With regard to the at least one polymer in the polymer solution, it is preferred that it is the same polymer as in the polymer in the repair patch, i. e., it is preferred that the at least one polymer in the polymer solution is at least one thermoplastic elastomer, preferably the same as in the polymer filament. This will have the effect of an improved bonding of the polymer filament to the composite surface, which may further add to an improved erosion resistance. In general, the polymer solution is coated to a thickness dependent on the constitution of the underlying substrate surface. That is, a more porous surface requires a thicker coating of polymer solution. For example, the polymer of the polymer solution may be coated to a thickness in the range of from 10 to 50 µm. Again, it is preferred that the solvent of said polymer solution is evaporated before the next step. This may also be achieved by either allowing the substrate coated with the polymer solution to dry under ambient conditions or by applying heat such as by using a heat gun as known in the art.

Next, heat is applied to the at least one area of at least partial damage in order to heat up the surface of the composite substrate. This step is necessary in order to prepare the composite substrate for the next step, which is applying a polymer filament onto the surface of the composite substrate so that the polymer filament melts and covers the damaged area. It is also possible that heating and applying a polymer filament takes place at the same time. This depends on the size of the damaged area as well as on the dimensions of the polymer filament and the time that is needed to melt it. Heating up the surface of the composite substrate may provide the advantage of a better bonding of the molten polymer filament to the surface. The polymer filament may also be used to fill the portion of the substrate that is damaged. With this possibility it is not necessary to reconstruct the surface before repairing the protection layer. The polymer layer that is used for repairing the protection layer can also be used to fill the damaged portion of the substrate.

The polymer filament may comprise at least one thermoplastic elastomer. The use of at least one thermoplastic elastomer may have the advantage that an effective erosion protection layer may be obtained. Furthermore, since the polymer filament repair patch is molten onto the substrate and forms an intimate adhesion with the substrate surface, there is no need for a PSA layer or using other adhesives for affixing the polymer filament to said surface. The polymer filament may have any given diameter. Generally, the diameter of the polymer filament is determined by the shape and size of the damaged area of the protection layer of the composite substrate. In most cases, the polymer filament is used to repair smaller damages, such as for example punctures, tears, cuts or gaps but it may also be used to repair larger damaged areas. The polymer filament may be applied such that it also covers the edges of the protection layer surrounding the damaged area.

The polymer filament may provide a shaped cross-section. The cross-section may for example be circular. In order to achieve a good transition to the protection layer it may also be thicker in the middle or centre and more flat or tapered to at least one of the edges, e. g. to two opposing edges (seagull shaped). An oval or elliptical shape is also possible.

It is also preferred to squeeze out air that may be entrapped under the polymer filament, preferably by means of a roller, preferably a silicone or rubber roller. Air or air bubbles entrapped under the repair patch may be detrimental to the adhesion of the repair patch to the substrate and/or to the erosion resistance of the finished protection layer. In general, it is preferred that the repair patch does not comprise an adhesive layer such as a PSA layer for affixing to the composite substrate surface.

According to one embodiment of the invention, the protection layer of the rotor blade may comprise at least one thermoplastic elastomer. The use of at least one thermoplastic elastomer may have the advantage that an effective erosion protection layer may be obtained.

According to one embodiment the at least one thermoplastic elastomer in the polymer filament and the protection layer is selected from thermoplastic polyurethane, styrenic block copolymers, thermoplastic olefins, elastomeric alloys, thermoplastic copolyesters, thermoplastic polyamides and combinations thereof, and preferably is thermoplastic polyurethane. With regard to the thermoplastic elastomer, any thermoplastic elastomer may be used. The term "thermoplastic elastomers" as used herein has the meaning common in the art, i. e. compounds behaving at room temperature similar to classic elastomers, but are moldable into shape under addition of heat, i. e. which exhibit in addition to elastomeric properties thermoplastic behaviour. Of further particular importance to the present disclosure is the elastomeric behaviour under ambient conditions, i. e. the ability to stretch or deform under physical influence and return to its original or near original shape. This has the benefit of creating a longer life and better physical range than other materials, which means that these materials may act as protection layer for the composite substrate against physical influence such as raindrops, sand or dust particles impinging the substrate surface at high speeds. In summary, the polymer filament comprising thermoplastic elastomers may have the advantages of being able to be affixed under the addition of heat, thereby saving additional adhesive, and offer erosion protection for the composite substrate.

Preferably, the at least one thermoplastic elastomer in the polymer filament and the protection layer is selected from thermoplastic polyurethane, styrenic block copolymers, thermoplastic olefins, elastomeric alloys, thermoplastic polyesters, thermoplastic polyamides and combinations thereof. Exemplary, commercially available thermoplastic elastomers are these under the trade designations Thermolast, Santoprene (block copolymers), Thermolast A, Forprene, Termoton-V (elastomeric alloys), Sofprene (SBS), Laprene (SBS), Thermolast K (SEBS) (styrenic block copolymers), For-Tec E (thermoplastic olefins), Desmopan, Elastollan, Avalon, Irogran (thermoplastic polyurethane). Since thermoplastic polyurethanes exhibit properties such as elasticity, transparency, and a certain resistance to oil, grease and abrasion, they are preferred as thermoplastic elastomers in the present disclosure.

According to another embodiment, the polymer in the polymer filament may be the same polymer as in the protection layer. This embodiment provides good adhesion and resistance to erosion. It is also preferred that the polymer is a thermoplastic elastomer, with the same disclosure and preference as discussed above with regard to the thermoplastic elastomer in the polymer filament.

According to yet another embodiment, the polymer in the polymer solution may be the same as the polymer in the filament and/or the protection layer. Again such an embodiment provides good adhesion and resistance to erosion as discussed above.

The at least one organic solvent of the polymer solution may be selected from tetrahydrofurane, diethylether, dichloromethane, trichloromethane, ethyl acetate, dimethylformamide, ethanol, cyclohexane, butanol, pentanol, hexanol, diethylene glycol, diethylene glycol dimethyl ether, methyl tert-butylether, methylene chloride, pentane, hexane, petroleum ether, xylene, and mixtures thereof, preferably tetrahydrofurane, isopropanol, ethanol, and mixtures thereof. Of these solvents, tetrahydrofurane, isopropanol and ethanol, dichloromethane and mixtures thereof are particularly preferred, with particular preference of tetrahydrofurane. Alternatively, aqueous dispersions of e. g. thermoplastic polyurethanes may be used. With regard to the at least one polymer in the polymer solution, it is preferred that it is the same polymer as in the polymer in the polymer filament, i. e., it is preferred that the at least one polymer in the polymer solution is at least one thermoplastic elastomer, preferably the same as in the polymer filament. This will have the effect of an improved bonding of the polymer filament to the composite surface, with may further add to an improved erosion resistance.

According to yet another embodiment, the molten polymer filament may also cover the edges of the protection layer surrounding the damaged area. Such an embodiment provides an advantageous solution since it establishes a solid connection between the already existing protection layer and the newly applied polymer filament. In addition, if heat gets applied during the application process of the polymer filament, the heat may also partially melt the existing protection layer such that it may be mixed with the molten polymer filament thereby creating a new homogeneous layer.

The heat that is applied in step (v) and/or (vi) of the method according to the invention so that the surface of the composite substrate is heated may preferably be carried out by the addition of hot air. This may be achieved, dependent on the size of the substrate, in a hot air oven or by means of a heat gun. In this regard, it is preferred that the air temperature used in this step has temperature in the range of from 120 to 500 °C, preferably in the range of from 200 to 450 °C, more preferably from 250 to 350 °C.

Melting and covering the damaged area may be made sure by visual inspection of the area. However, in particular when using thermoplastic polyurethane in either or all of protection layer, polymer solution and polymer filament, it is preferred to apply heat until the temperature of the polymer filament reaches 140 to 170 °C. This temperature may be measured by means of a contactless thermometer, e. g. an IR thermometer used for measuring temperatures of surfaces from a distance.

After the polymer filament has molten and the protection layer has been established, it may be allowed to cool down.

It is also possible in a further step (vii) to flatten the applied and molten polymer filament material so that it is evenly applied over the area of at least partial damage. This may for example be done with the help of a roller, preferably a silicone or rubber roller that is rolled over the molten polymer filament so as to flatten the edges and fuse the patch to the composite substrate and/or to the surrounding part of the protection layer. It is also preferred that rolling the roller over the polymer filament is done parallel to applying heat to the polymer filament. This may be advantageous in that a closer connection between the molten polymer filament and the composite substrate and/or the surrounding part of the protection layer may be established. In particular, this may be particularly important when larger portions of polymer filament are being used in the method prescribed herein.

According to another embodiment of the invention any excessive molten polymer filament material may spread over the edge of the protection layer surrounding the damaged area. It may either just extend over the edge or it may be fused to it as already described above.

It is further possible to use the method according to the invention in combination with other repair solutions for repairing a surface of a rotor blade or aircraft wings. If the damage is larger, e. g. covers an area of several square centimetres, the current invention can be combined for example with a repair solution using a repair patch of a polymer tape. The current invention may be used in such a scenario to seal or fill any gaps that may exist between the protection layer and the repair tape that is applied on the damaged part to replace the original protection layer. If the polymers used for the original protection layer, the repair patch and the polymer filament according to the invention comprise the same kind of polymer, a very good result of the repaired protection layer may be achieved.

Since the method as described herein is able to provide repaired protective coatings exhibiting desirable erosion protection properties, the present invention further provides rotor blades, e. g. of helicopters or wind turbines, as well as aircraft wings obtained by the present method.

In particular, since the present method is excellently suited for repairing rain erosion protection layers of rotor blades of wind turbines, a rotor blade of a wind turbine comprising a protection layer obtained by the method described herein is preferred. Preferably, the protection layer is a rain erosion protection layer.

### Drawings

The invention will now be described in more detail with reference to the following Figures exemplifying particular embodiments of the invention:
- Fig. 1: schematic drawing of a cross-section of a substrate and a protection layer with an area of a partial damage;
- Fig. 2: schematic drawing of the substrate with protection layer of Fig. 1 with removed parts of the protection layer;
- Fig. 3: schematic drawing of the substrate with protection layer of Fig. 1 and 2 with a primer solution being applied;
- Fig. 4: schematic drawing of the substrate with protection layer of the preceding figures with a polymer filament being held in the area of the partial damage;
- Fig. 5: schematic drawing of the substrate with protection layer of the preceding figures with a molten piece of the polymer filament and
- Fig. 6: schematic drawing of the substrate with protection layer of the preceding figures with a flattened piece of the polymer filament.

Herein below various embodiments of the present invention are described and shown in the drawings wherein like elements are provided with the same reference numbers.

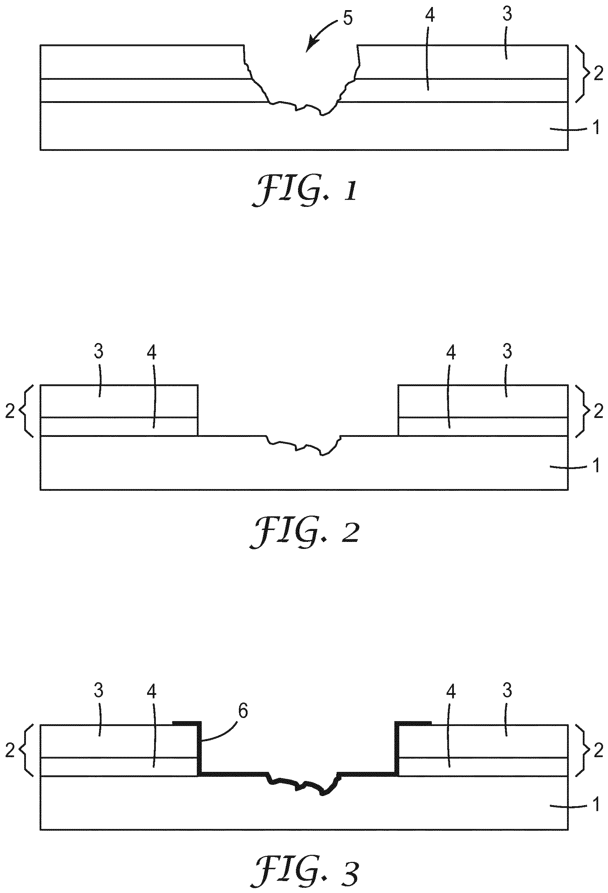

In Fig. 1 a cross-section of a substrate 1 with a protection layer 2 can be seen. The protection layer 2 comprises a polymer layer 3 and an adhesive layer 4, wherein the adhesive layer is positioned between the polymer layer 3 and the substrate 1 and serves to adhere the polymer layer 3 to the surface of the substrate 1. The polymer layer 3 may for example comprise a thermoplastic polyurethane. The adhesive layer 4 may for example be a pressure sensitive adhesive. Fig. 1 further shows an area of a minor damage 5 in the protection layer 2 applied to the substrate 1 and the substrate 1. The damage effects the polymer layer 3, the adhesive layer 4 and the substrate 1.

In Fig. 2 the damaged area of Fig. 1 is shown after the surrounding damaged protection layer 2 has been removed. This may be advantageous in order to get a clean edge of the protection layer 2 and also to remove loose material from the damaged area. This process may for example be done with the help of a knife cutter by performing a circular cut or longitudinal cuts around the damaged area.

It may be advantageous to clean the surface of the damaged area for example with isopropyl alcohol and a lint-free cloth in order to remove any residuals of the adhesive and any other dirt.

As shown in Fig. 3, the surface may then be primed with an adhesion promoter or primer 6. The primer 6 should be applied to the surface and the edges of the surrounding protection layer 3 as well, as also shown in Fig. 3.

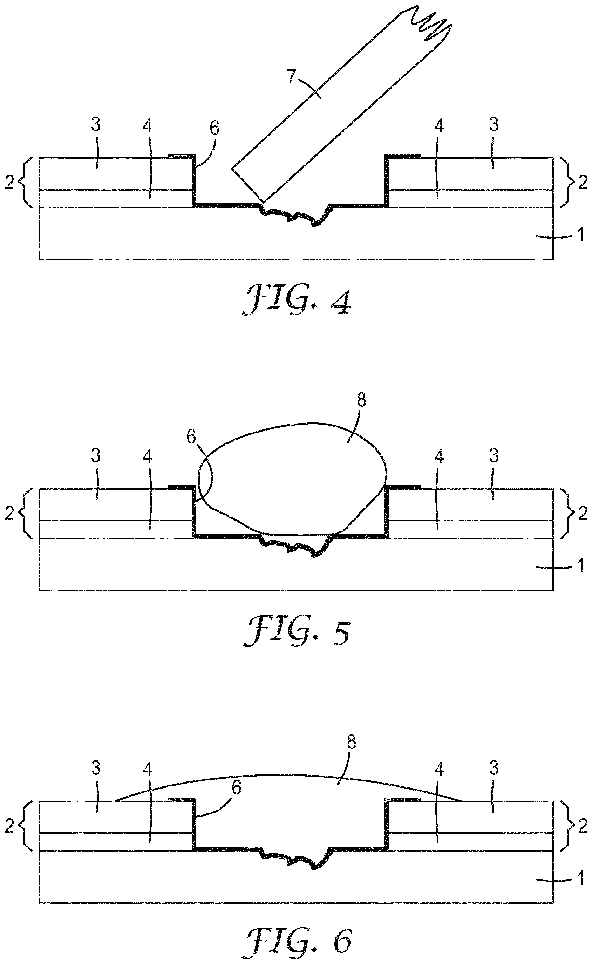

As a next step the surface of the damaged area as well as the surrounding edges of the protection layer 2 will be heated. This can for example be done with a hot air blower or heat gun. After the surface has been sufficiently heated (usually visible when the surrounding protection layer starts to gloss) a polymer filament 7 is brought in contact with the hot surface as shown in Fig. 4. It is possible to still heat the damaged area while the polymer filament 7 is brought in contact with the hot surface. The polymer filament 7 may for example comprise a thermoplastic polyurethane. It may start to melt as soon as it gets in contact with the heated area or as soon as it gets heated through for example hot air. To separate the molten part of the polymer filament 7 from the rest of the filament additional heat may be applied. A molten polymer filament 8 in the damaged area is shown in Fig. 5. The molten material 8 may then be evenly applied to the damaged area for example by means of a silicon rubber roll (not shown). Any excessive material will be spread out over the surrounding protection layer 2. A smooth transition between tape and repair material from the polymer filament 7 may be obtained. If the edges of the polymer filament 7 are heated long enough it is even possible to fuse the repair material from the polymer filament 7 with the polymer material from the protection layer 2.

### Examples

The present disclosure is further described without however wanting to limit the disclosure thereto. The following examples are provided to illustrate certain embodiments but are not meant to be limiting in any way. Prior to that some test methods used to characterize materials and their properties will be described.

### Materials used:

3M W8750 tape: thermoplastic polyurethane tape having acrylic PSA layer
3M W9910 primer
Krystalgran PE
Isopropyl Alcohol
Application Solution (mixture of 75 wt.-% demineralized water and 25 wt.-% Isopropyl Alcohol)
Grit 320 sand paper
Heat Gun (Hot Air Blower) with adjustable temperature setting
Small Paint Brush
Rubber Roller (e. g. 3M Safety-Walk Rubber Hand Roller 903)

### Polymer Filament

The polymer filament is produced by extrusion of Krystalgran PE on a Collin Teach-Line E20T with a simple circular die opening. Extrusion conditions were as follows:

| | |
|---|---|
| Zone 1: | 120 °C |
| Zone 2: | 150 °C |
| Zone 3: | 150°C |
| Zone 4: | 150 °C |
| Die: | 150 °C |
| Screw speed: | 50 rpm |
| Melt pressure: | 46 bar |

After extrusion the strand was pulled through a water basin for cooling and wound onto spools. It was also demonstrated that various additives - such as UV absorbers and stabilizers such as for examples hindered amine light stabilizers (HALS) can be easily added to the resin. The filament diameter can be adjusted and controlled by haul-off speed and ranged from approximate 1 to 2 mm.

### Application Procedure

The test blade profiles surfaces having a length of 225 mm simulating the leading edges of wind turbines in the rain erosion text as described herein were ground with grit 320 abrasive paper, cleaned with isopropyl alcohol and allowed to dry under ambient conditions. Two sheets of wind protection tape were prepared. The size of each sheet was selected in such a way that there was a 5 - 10 mm excess of the sheet on the long as well on both of the short sides of the profile. Also, there was a small gap between the two pieces at the front edge of the profile.

Both sheets were made of 3M Wind Protection Tape W8750. The liner was removed from the first tape sheet and the PSA side of the tape as well as the profile surface were sprayed with the application solution. Next, the tape sheet was affixed with its PSA side onto one side of the profile. The tape was positioned in such a way that there was a 5 - 10 mm excess of the sheet on the long as well on both of the short sides of the profile and a distance of approx. 5 mm to the very outer leading edge of the profile. The outer surface of the tape sheet was then sprayed with application solution. A rubber squeegee was used to carefully squeeze out the application solution without moving or stretching the tape sheet. Accordingly, all air bubbles and water pockets which were visible under the tape sheet were removed. These steps were repeated with the second tape sheet on the other side of the profile. After that, the profile was allowed to dry for at least 1 hour under ambient conditions.

Next, excess tape material was sliced off from the long and short edges of the profile. A Heat Gun was used to further carefully dry the gap between the two tape sheets on the profile. After that, W9910 adhesion promoter was applied onto the surface of the profile in the gap between the two tape sheets by means of a small paint brush. Again, a Heat Gun was used to evaporate the adhesion promoter solvent.

A Heat Gun with a temperature setting of 270 °C was used to gently heat-up the damaged area. As soon as the edges of the surrounding protection layer started to gloss, the repair polymer filament was brought into contact with the damaged area. The polymer filament stated to melt. At that time, a rubber roller was used in order to push the molten polymer filament towards the surface of the substrate. Additional heat and pressure was applied in order to finalize the bonding process and flatten the edges of the molten polymer filament. The test profiles were allowed to cool down under ambient conditions. Any excess material was removed. Finally, the profiles were stored for 1 week under ambient conditions to obtain final performance.

### Test method:

### Rain Erosion Test

The anti-erosion properties were measured with the rain erosion test method according to ASTM G73-10.

The test profiles obtained as described above were mounted on the blades of a rotor, which was rotated to provide a speed ranging from test velocity of 160 m/s at the tip of the blades to a test velocity of 143 m/s in the center and 126 m/s at root.

Rainfall was simulated by spraying water (23 °C), having a droplet size of about 2 mm, with a velocity of 30 mm/hour onto the rotating blades inside the rig. The test was stopped every 30 minutes after which the coated surfaces were visually inspected. The test was run during 18 hours.

### Rain erosion test results

The examples were visually inspected and any damage or erosion to the tape surfaces were determined. For both examples, no visible damage or breakthrough of the repair areas could be observed. Thus, it can be concluded that the method as described herein is excellently suited for repairing erosion tape surfaces of rotor blades such as rotor blades of wind turbines.

## Claims

1. A method for repairing the surface of rotor blades or aircraft wings, comprising
(a) a composite substrate (1); and
(b) a protection layer (2) having at least one area of at least partial damage,
the method comprising:
(i) removing at least part of the damaged part of the protection tape (2);
(ii) optionally, reconstructing the surface of damaged composite substrate (1);
(iii) optionally, applying primer solution (6) to the surface of the composite substrate;
(iv) optionally, applying a polymer solution, preferably in at least one organic solvent;
(v) applying heat so as to heat the surface of the composite substrate;
(vi) applying a polymer filament (7) onto the surface of the composite substrate so that the polymer filament melts and covers the damaged area.

2. The method according to claim 1, wherein the protection layer (2) of the rotor blade or aircraft wing comprises at least one thermoplastic elastomer.

3. The method according to claim 1 or 2, wherein the polymer filament (7) comprises at least one thermoplastic elastomer.

4. The method according to claim 1, wherein the at least one thermoplastic elastomer in the polymer filament and the protection layer is selected from thermoplastic polyurethane, styrenic block copolymers, thermoplastic olefins, elastomeric alloys, thermoplastic copolyesters, thermoplastic polyamides and combinations thereof, and preferably is thermoplastic polyurethane.

5. The method according to any one of the preceding claims, wherein the polymer in the polymer filament (7) is the same polymer as the polymer in the protection layer.

6. The method according to any of the preceding claims, wherein the polymer in the polymer solution is the same as in the polymer filament (7) and/or the protection layer (2).

7. The method according to any of the preceding claims, wherein the at least one organic solvent of the polymer solution is selected from tetrahydrofurane, diethylether, dichloromethane, trichloromethane, ethyl acetate, dimethylformamide, ethanol, cyclohexane, butanol, pentanol, hexanol, diethylene glycol, diethylene glycol dimethyl ether, methyl tert-butylether, methylene chloride, pentane, hexane, petroleum ether, xylene, and mixtures thereof, preferably tetrahydrofurane, isopropanol, ethanol, and mixtures thereof.

8. The method according to any one of the preceding claims, wherein the molten polymer filament (8) also covers the edges of the protection layer surrounding the damaged area.

9. The method according to any one of the preceding claims, wherein the heat applied in step (v) is in the range of from 120 to 500 °C, preferably from 200 to 450 °C, more preferably from 250 to 350 °C.

10. The method according to any one of the preceding claims, wherein the heat is also applied during step (vi).

11. The method according to any one of the preceding claims, wherein the heat applied in step (v) is applied until the temperature of the polymer filament (7) reaches 140 to 170 °C.

12. The method according to any one of the preceding claims, with a further step (vii) of flattening the applied and molten polymer filament (8) material so that it is evenly applied over the area of at least partial damage.

13. The method according to claim 12, wherein any excessive molten polymer filament (8) material is spread over the edge of the protection layer surrounding the damaged area, e. g. during step (vii).

14. A rotor blade or aircraft wing, comprising a protection layer, obtained by the method according to any one of the preceding claims.

15. The rotor blade or aircraft wing according to claim 14, wherein the protection layer is located on the leading edge of the rotor blade, preferably wherein the protection layer is a rain erosion protection layer.
